(19) Europäisches Patentamt
European Patent Office
Office européen des brevets

(11) **EP 1 935 733 A1**

(12) **DEMANDE DE BREVET EUROPEEN**

(43) Date de publication:
**25.06.2008 Bulletin 2008/26**

(21) Numéro de dépôt: **07301677.6**

(22) Date de dépôt: **14.12.2007**

(51) Int Cl.:
**B60T 8/172** *(2006.01)*  **B60W 40/12** *(2006.01)*
**G01G 19/08** *(2006.01)*

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **22.12.2006 FR 0655843**

(71) Demandeur: **Peugeot Citroen Automobiles SA 78140 Vélizy Villacoublay (FR)**

(72) Inventeur: **Fradin, Loïc 94240 L'Hay Les Roses (FR)**

(54) **Procédé et dispositif d'estimation de charge longitudinale, notamment applique aux véhicules automobiles**

(57) L'invention concerne un procédé d'estimation de la charge longitudinale à laquelle est soumis un véhicule automobile. Le procédé comporte au moins :
• une étape d'estimation d'inclinaison de voirie délivrant une information (13) relative à l'inclinaison de la route sur laquelle évolue le véhicule en fonction de mesures d'accélération longitudinale (10) et d'informations (32) relatives au déplacement du véhicule (vitesse, accélération, sens de roulage,...) ;
• une étape d'estimation de variation d'effort résistif subie par le véhicule délivrant une information relative à la variation d'effort résistif (33) subie par le véhicule en fonction des informations (30,31) relatives aux efforts (ou couples) réalisés par le système « Groupe Moto Propulseur » et le système de freinage, ces informations pouvant être des mesures ou des estimations fournies respectivement par le système « Groupe Moto Propulseur » ou par le système de freinage, ou bien les consignes à destination de ces systèmes, et à partir d'informations (32) correspondant au mouvement observé du véhicule.

L'invention a aussi pour objet un dispositif d'estimation de charge longitudinale. En particulier, l'invention s'applique aux véhicules automobiles comportant des dispositifs mettant en oeuvre des fonctions nécessitant la connaissance, au moins approximative, de la charge longitudinale à laquelle est soumis ledit véhicule.

Fig. 5

EP 1 935 733 A1

**Description**

L'invention concerne un procédé et un dispositif d'estimation de charge longitudinale. Par charge longitudinale, on entend l'ensemble des éléments extérieurs au système agissant sur sa dynamique longitudinale. En particulier, l'invention s'applique aux véhicules automobiles comportant des dispositifs mettant en oeuvre des fonctions nécessitant la connaissance, au moins approximative, de la charge longitudinale à laquelle est soumis ledit véhicule. Les éléments constituant la charge longitudinale du véhicule sont principalement l'effet de la pesanteur (lié à l'inclinaison de la voirie sur laquelle se déplace le véhicule); les efforts résistifs (frottements, aérodynamiques,...) auxquels est soumis le véhicule; et la masse du véhicule.

Les véhicules automobiles peuvent comporter un ensemble de fonctions d'assistance au conducteur, interagissant au niveau du contrôle et de la commande de la chaîne de traction. Certaines fonctions d'assistance utilisent des informations relatives à la charge longitudinale à laquelle est soumis ledit véhicule. A titre d'exemple non limitatif, les fonctions suivantes utilisent de telles informations, soit parce que ces informations sont nécessaires à leur mise en oeuvre, soit parce que ces informations permettent d'améliorer leur comportement.

La fonction dite « Arrêt et Marche » (ou selon l'expression anglo-saxonne « Stop & Start ») coupe le moteur en le plaçant en veille, lorsque le véhicule est à l'arrêt et que le conducteur appuie sur le frein. Dès que le conducteur lâche le frein et accélère, le moteur est mis en marche immédiatement et instantanément. Pour un plus grand confort du conducteur, les stratégies de mise en veille du moteur tiennent notamment compte de l'inclinaison de la voirie.

La fonction d'assistance au démarrage en côte (ou selon l'expression anglo-saxonne « Hill Assist ») demande temporairement au système électronique de freinage de maintenir le véhicule immobile lors d'un démarrage en côte. La pression de liquide de frein dans les étriers de freins est maintenue le temps nécessaire au conducteur pour passer de la pédale de frein à l'accélérateur. Cette pression est ensuite progressivement réduite, en fonction notamment de la variation de couple moteur (fonction désignée par l'expression anglo-saxonne « Drive away »). La fonction d'assistance au démarrage en côte utilise les informations relatives à l'inclinaison de la voirie pour déterminer si elle doit être active ou non. Ainsi, lorsque l'inclinaison de la voirie est inférieure à un seuil donné (et bien sûr à plat ou en descente), la fonction d'assistance au démarrage en côte n'est pas active. Les informations relatives à la charge longitudinale peuvent encore être utilisées pour moduler certains paramètres de ladite fonction comme par exemple la temporisation du maintien de la pression dans les étriers de freins, la rapidité du relâchement de la pression,...

La fonction d'adaptation des lois de passage de rapport de boîtes de vitesses permet de déterminer les instants où doivent avoir lieu les changements de rapport de boîtes de vitesses, lesdits instants étant choisis pour satisfaire au mieux le conducteur. Cette fonction est notamment mise en oeuvre dans les boites de vitesses automatiques ou robotisées. La décision de changement de rapport tient compte notamment de la vitesse du véhicule, de l'enfoncement pédale d'accélérateur,... Ladite fonction peut notamment être adaptée à la charge longitudinale exercée sur le moteur résultant notamment de la masse du véhicule, des efforts résistifs et de l'effet de l'inclinaison de la voirie sur le véhicule.

La fonction de régulation de vitesse du véhicule à une consigne donnée nécessite une connaissance des efforts extérieurs, et notamment de l'effet de l'inclinaison de la voirie sur le véhicule ainsi que la masse du véhicule. Cette connaissance permet de maîtriser au mieux la dynamique du véhicule, en particulier les variations d'accélération, lorsque sa vitesse est régulée. Cela est d'autant plus important que les vitesses et/ou les accélérations sont faibles.

La fonction de commande du véhicule en couple utile ou en accélération reçoit, en entrée, des informations relatives à une position de la pédale d'accélérateur et à une vitesse véhicule donnée. Ces informations sont interprétées par le calculateur moteur en une consigne de couple moteur. Une position de la pédale d'accélérateur peut être associée à une consigne de couple utile nécessitant la connaissance du couple extérieur qu'exerce l'environnement sur le véhicule, et donc in fine la connaissance d'informations relatives à la charge longitudinale. Une position de la pédale d'accélérateur peut être encore associée à une consigne en accélération nécessitant la connaissance du couple extérieur qu'exerce l'environnement sur le véhicule et la variation de la masse du véhicule par rapport à la masse nominale, et donc in fine la connaissance d'informations relatives à la charge longitudinale.

Bien que ces différentes fonctions aient en commun leur besoin de connaître les informations relatives à la charge longitudinale, elles diffèrent en ce que certaines nécessitent plus particulièrement la connaissance de l'inclinaison de la route alors que les autres nécessitent plus particulièrement la connaissance des variations d'effort résistif par rapport à un modèle de référence. En outre, ces besoins s'expriment aussi bien lorsque le véhicule est en phase de roulage ou en phase d'arrêt.

Les informations relatives à la charge longitudinale peuvent être issues soit d'estimations soit de mesures. On entend par estimation une valeur quantifiant, de manière absolue ou relative, une grandeur physique essentiellement calculée à l'aide d'un modèle physique alimenté par des données d'entrée. Les données d'entrée sont par exemple des paramètres, d'autres estimations, des mesures... On entend par mesure une valeur issue essentiellement d'un ou plusieurs capteurs quantifiant, de manière absolue ou relative, une grandeur physique. D'une manière générale, dans le domaine automobile, les estimations sont privilégiées, puisque ne nécessitant pas la mise en oeuvre de capteurs et de leur chaîne de traitements ; cette solution s'avère généralement moins coûteuse. Cependant les estimations nécessitent une étude approfondie permettant d'établir les performances et le domaine de fonctionnement de leur modèle physique.

Les procédés d'estimation de charge longitudinale (plus généralement, et parfois à tort, appelés procédés d'estimation de pente) et les dispositifs correspondant connus de l'état de la technique, n'utilisent pas à titre principal une mesure d'accélération longitudinale du véhicule issue d'accéléromètre ou d'inclinomètre par exemple. En outre, ces procédés et dispositifs sont principalement utilisés en coopération avec la fonction d'adaptation des lois de passage de rapport de boîtes de vitesses. L'utilisation de tels procédés et dispositifs en coopération avec d'autres fonctions est donc limitée, puisque ceux-ci ne délivrent pas nécessairement les informations relatives à la charge longitudinale adaptées à ladite fonction, avec la précision et les performances souhaitées.

L'invention a notamment pour but de pallier les inconvénients précités. A cet effet, l'invention a pour objet un procédé d'estimation de la charge longitudinale à laquelle est soumis un véhicule automobile. Le procédé comporte au moins :

- une étape d'estimation d'inclinaison de voirie délivrant une information relative à l'inclinaison de la route sur laquelle évolue le véhicule en fonction de mesures d'accélération longitudinale et d'informations relatives à la vitesse du véhicule ;
- une étape d'estimation de variation d'effort résistif subie par le véhicule délivrant une information relative à la variation d'effort résistif subie par le véhicule en fonction d'une part des informations relatives soit à des consignes d'effort à destination du groupe moteur et du système de freinage, soit à partir d'estimations ou de mesure des efforts réalisés par ces mêmes organes, et d'autre part à partir d'informations correspondant au mouvement du véhicule observé.

Le procédé peut en outre comporter une étape d'estimation de masse délivrant une information relative à la variation de masse du véhicule en fonction de l'information relative à l'inclinaison de la route et de l'information relative à la variation d'effort résistif.

Dans un mode de réalisation, l'étape d'estimation d'inclinaison de voirie reçoit en entrée :

- des mesures d'accélération longitudinale ;
- des mesures de la vitesse du véhicule ;
- une information permettant de déterminer le sens de roulage du véhicule.

Les mesures de la vitesse du véhicule et l'information sur le sens du roulage sont combinées dans une étape pour obtenir une vitesse signée du véhicule. La vitesse signée est ensuite dérivée dans une étape aboutissant à une information représentant l'accélération longitudinale. Cette information représentant l'accélération longitudinale est utilisée principalement pour le calcul de l'inclinaison de voirie, et aussi dans le calcul de l'assiette du véhicule. Cette estimation d'assiette du véhicule est elle aussi utilisée pour le calcul de l'inclinaison de voirie. Une étape filtre et synchronise temporellement la mesure d'accélération longitudinale avec l'information représentant l'accélération longitudinale suscitée, et délivre une information représentant l'accélération totale synchronisée. Une étape de calcul de l'inclinaison de voirie délivre en sortie une information relative à l'inclinaison de la route par comparaison de l'accélération totale synchronisée avec l'accélération longitudinale, et prenant en compte l'estimation de l'assiette du véhicule.

Dans un mode de réalisation, l'étape d'estimation de variation d'effort résistif comporte :

- une étape d'application d'un modèle nominale du véhicule adapté au calcul d'une information représentant le mouvement modélisé du véhicule à partir d'une information correspondant au mouvement du véhicule observé, d'une information correspondant à l'effort (ou couple) réalisé par le système « Groupe Moto Propulseur », d'une information correspondant à l'effort (ou couple) réalisé par le système de freinage. Ces deux dernières informations pouvant être des mesures ou des estimations fournies respectivement par le système « Groupe Moto Propulseur » ou par le système de freinage, ou bien les consignes à destination de ces systèmes ;
- une étape de régulation au cours de laquelle l'écart entre le déplacement prévu représenté par l'information représentant le mouvement modélisé du véhicule et le déplacement observé représenté par l'information correspondant au mouvement du véhicule observé est utilisé pour le calcul d'une information représentant la variation d'effort résistif.

Dans un mode de réalisation, l'étape d'estimation de masse comporte une étape recevant en entrée l'information relative à l'inclinaison de la route et l'information relative à la variation d'effort résistif. La part de variation d'effort résistif non du à l'inclinaison de la voirie est calculée puis délivrée sous la forme d'une information correspondant à la variation de masse du véhicule.

L'invention a aussi pour objet un dispositif d'estimation de charge longitudinale comportant :

- un estimateur d'inclinaison de la route adapté à la mise en oeuvre de l'étape d'estimation d'inclinaison de voirie du procédé d'estimation de charge longitudinale selon l'invention ;
- un estimateur de la variation d'effort résistif adapté à la mise en oeuvre de l'étape d'estimation de variation d'effort résistif compris dans le procédé d'estimation de charge longitudinale selon l'invention.

Dans un mode de réalisation, le dispositif d'estimation de charge longitudinale comporte aussi un estimateur d'écart de masse adapté à la mise en oeuvre de l'étape d'estimation de masse compris dans le procédé d'estimation de charge longitudinale selon l'invention.

Dans un mode de réalisation, l'estimateur d'inclinaison de la route reçoit en entrée une mesure d'accélération longitudinale, ainsi qu'une mesure ou une estimation du déplacement longitudinal du véhicule (distance, vitesse et/ou accélération), et éventuellement une estimation de l'assiette du véhicule (si elle n'est pas fournie, l'estimation de l'assiette du véhicule peut être réalisée à l'intérieur même du dispositif, à partir des informations précédentes). L'estimateur d'inclinaison de la route délivre en sortie au moins l'information relative à l'inclinaison de la route sur laquelle évolue le véhicule.

Dans un mode de réalisation, l'estimateur de variation d'effort résistif reçoit en entrée les informations relatives aux efforts (ou couples) réalisés par le système « Groupe Moto Propulseur » et le système de freinage. Ces informations pouvant être des mesures ou des estimations fournies respectivement par le système « Groupe Moto Propulseur » ou par le système de freinage, ou bien les consignes à destination de ces systèmes. L'estimateur de variation d'effort résistif reçoit également en entrée les informations correspondant au mouvement du véhicule observé. L'estimateur de variation d'effort résistif délivre en sortie l'information relative à la variation d'effort résistif subie par le véhicule.

Dans un mode de réalisation, l'estimateur d'écart de masse reçoit en entrée une mesure ou une estimation du déplacement longitudinal du véhicule (distance, vitesse et/ou accélération), l'information relative à l'inclinaison de la route sur laquelle évolue le véhicule, ainsi que l'information relative à la variation d'effort résistif subie par le véhicule, et délivre en sortie l'information relative à la variation de masse du véhicule.

L'invention a notamment pour avantages qu'elle permet, en livrant à la fois l'estimation de l'inclinaison de la route, et celle de la variation d'effort résistif, d'obtenir une meilleure adéquation entre estimations réalisées et les besoins propre à chacune des fonctions. En outre, l'invention permet de garantir une meilleure précision dans les phases de dynamique importante auxquelles est soumis le véhicule, notamment grâce au traitement de synchronisation de la mesure de l'accéléromètre sur l'accélération longitudinale issue de la vitesse véhicule.

D'autres caractéristiques et avantages de l'invention apparaîtront à l'aide de la description qui suit faite en regard des dessins annexés qui représentent :

- la figure 1a, par un schéma, les forces résultantes de l'effet de l'inclinaison de la voirie sur le véhicule ;

- la figure 1b, par un synoptique, un procédé d'estimation de charge longitudinale selon l'invention ;

- la figure 2, par un synoptique, un mode de réalisation de l'étape d'estimation d'inclinaison de voirie compris dans le procédé d'estimation de charge longitudinale selon l'invention ;

- la figure 3, par un synoptique, un mode de réalisation de l'étape d'estimation de variation d'effort résistif compris dans le procédé d'estimation de charge longitudinale selon l'invention ;

- la figure 4, par un synoptique, un mode de réalisation de l'étape d'estimation de masse compris dans le procédé d'estimation de charge longitudinale selon l'invention ;

- la figure 5, par un schéma blocs, un dispositif d'estimation de charge longitudinale selon l'invention.

Sur les figures, les éléments identiques portent les mêmes références.

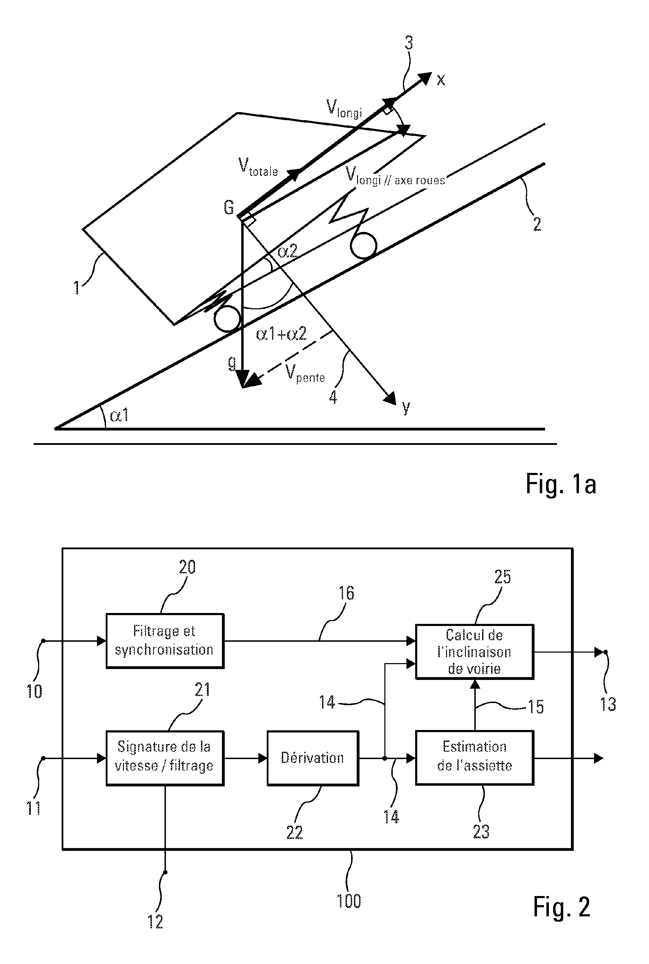

La figure 1a représente par un schéma les forces résultantes de l'effet de l'inclinaison de la voirie sur un véhicule automobile. L'angle $\alpha1$ est l'angle d'inclinaison par rapport à l'horizon d'une route 2 sur laquelle évolue un véhicule 1. L'angle $\alpha2$ caractérise l'assiette du véhicule 1 par rapport à la route 2. Le point G est le centre de gravité du véhicule 1. L'accélération due à la gravité à laquelle est soumise le véhicule est notée g. L'accélération longitudinale $\gamma_{longi \,//\, axe\ roues}$ du véhicule 1 s'exerce parallèlement à l'axe des roues du véhicule, donc parallèlement à la route 2. L'accélération longitudinale $\gamma_{longi \,//\, axe}$ roues est observable par mesure de la vitesse des roues ($\gamma_{longi \,//\, axe\ roues}$ = dv/dt). La vitesse des roues peut par exemple être déterminée à l'aide de capteurs de vitesse (capteurs ABS) sur chaque roue. L'accélération longitudinale $\gamma_{longi}$ représente l'accélération longitudinale du véhicule projetée sur le repère d'un accéléromètre longitudinal (axe 3 des abscisse et axe 4 des ordonnées) compris dans le véhicule 1. L'accélération totale $\gamma_{total}$ est l'accélération vue par ledit accéléromètre longitudinal. L'expression mathématique suivante est alors vérifiée :

EP 1 935 733 A1

$$\alpha 1 = \text{Arcsin}\left( \frac{\gamma_{\text{total}} - \gamma_{longi\ //\ axeroues}\ .\cos(\alpha 2)}{g} \right) - \alpha 2$$

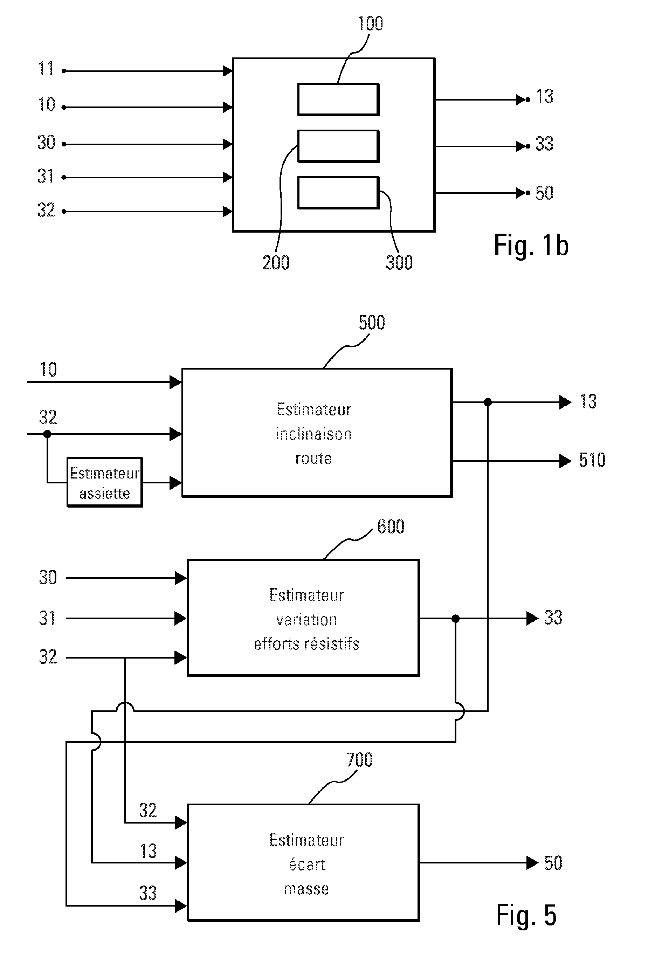

La figure 1b montre par un synoptique, un procédé d'estimation de charge longitudinale selon l'invention.

Le procédé selon l'invention comporte une étape d'estimation d'inclinaison de voirie 100. L'étape d'estimation d'inclinaison de voirie 100 reçoit notamment en entrée des mesures d'accélération longitudinale 10 réalisées par l'accéléromètre longitudinal compris dans le véhicule 1 et différentes informations 32 relatives au déplacement longitudinal (distance, vitesse et/ou accélération) du véhicule 1. L'étape 100, à partir notamment de ces paramètres, détermine et délivre en sortie une information 13 relative à l'inclinaison de la route sur laquelle évolue le véhicule 1. Cette information 13 quantifie l'angle α1.

Le procédé selon l'invention comporte une étape d'estimation de variation d'effort résistif 200 subie par le véhicule 1. L'étape 200 reçoit en entrée notamment des informations 30, 31 relatives respectivement aux efforts (ou couples) réalisés par le système « Groupe Moto Propulseur » et le système de freinage. Ces informations pouvant être des mesures ou des estimations fournies respectivement par le système « Groupe Moto Propulseur » ou par le système de freinage, ou bien les consignes à destination de ces systèmes. L'étape 200 reçoit également en entrée différentes informations 32 correspondant au mouvement observé du véhicule 1 (et notamment une information d'accélération longitudinale). L'étape 200, à partir notamment de ces paramètres, détermine et délivre en sortie une information 33 relative à la variation d'effort résistif subie par le véhicule 1.

Le procédé selon l'invention peut aussi comporter une étape d'estimation de masse 300. L'étape 300 reçoit en entrée l'information 13 relative à l'inclinaison de la route et l'information 33 relative à la variation d'effort résistif ainsi que différentes informations 32 correspondant au mouvement observé du véhicule 1 (et notamment une information d'accélération longitudinale). L'étape 300, à partir notamment de ces paramètres, détermine et délivre en sortie une information 50 relative à la variation de masse du véhicule 1.

Le procédé selon l'invention exécute de manière continue les étapes 100 et 200, et éventuellement l'étape 300. Le procédé selon l'invention permet donc de livrer à tout moment, les estimations d'inclinaison de voirie et de variations d'effort résistif, permettant ainsi de répondre de façon adéquate aux différents besoins de l'ensemble des fonctions d'assistance au conducteur, interagissant au niveau du contrôle et de la commande de la chaîne de traction, compris dans le véhicule 1. Ainsi, l'information 13, aussi bien lorsque le véhicule 1 est en phase d'arrêt ou de roulage, diffusée par l'étape 100, pourra avantageusement être utilisée par les fonctions d'assistance qui ont besoin de connaître l'inclinaison de la route et l'effet de la pesanteur sur le véhicule. En outre, l'information 33, délivrée par l'étape 200 lorsque le véhicule 1 est en roulage, pourra avantageusement être utilisée par les fonctions d'assistance qui ont besoin de connaître les efforts résistifs réellement appliqués sur le véhicule 1.

La figure 2 montre par un synoptique un mode de réalisation de l'étape d'estimation d'inclinaison de voirie compris dans le procédé d'estimation de charge longitudinale selon l'invention.

L'étape d'estimation d'inclinaison de voirie 100 reçoit en entrée :

• Une mesure d'accélération longitudinale 10 réalisée par l'accéléromètre longitudinal compris dans le véhicule 1 ;
• Une mesure ou estimation de la vitesse du véhicule 11 réalisée à partir des capteurs de vitesse de chaque roue du véhicule 1 ;
• une information 12 permettant de déterminer le sens de roulage du véhicule.

L'information 11 sur la vitesse du véhicule et l'information 12 sur le sens du roulage sont combinées dans une étape 21 de l'étape 100. Ainsi, à l'issue de l'étape 21, une vitesse signée du véhicule est obtenue et envoyée en entrée d'une étape 22 de dérivation. L'étape 21 peut en outre comporter une étape de filtrage de ladite vitesse signée, pour prendre en compte par exemple les défauts propres aux informations 11 ou 12 reçues. L'étape 22 de dérivation a pour objet le calcul de l'accélération longitudinale $\gamma_{longi\ //\ axe\ roues}$ par dérivation de la vitesse signée reçue de l'étape 21. L'étape 22 délivre une information 14 représentant l'accélération longitudinale $Y_{longi\ //\ axe\ roues}$. L'information 14 est utilisée par une étape 23 d'estimation d'assiette. A partir notamment de la valeur de l'accélération longitudinale $Y_{longi\ //\ axe\ roues}$ comprise dans le signal 23, l'étape 23 détermine et délivre une information 15 représentant l'angle α2, c'est-à-dire l'assiette du véhicule. A noter que dans un autre mode de réalisation, cette information sur l'assiette du véhicule peut être fournie par un capteur ou une estimation externe. Dans une étape 20, la mesure d'accélération longitudinale 10 peut être synchronisée et filtrée. L'étape 20 de filtrage et synchronisation a notamment pour fonction de compenser les retards entre d'une part la mesure ou estimation de la vitesse du véhicule 11 et aux algorithmes de calcul des étapes 21 ou 22, et d'autre part la mesure d'accélération longitudinale 10. En outre, l'étape 20 de filtrage peut être utilisée pour corriger au moins partiellement les défauts propres à la mesure 10 reçue. L'étape 20 délivre une information 16 représentant l'accélération totale $\gamma_{totale}$, éventuellement synchronisée et filtrée. Une étape 25 de calcul de l'inclinaison de voirie reçoit les informations 14, 15 et 16 et détermine et délivre en sortie l'angle $\alpha1$ d'inclinaison de la route. L'étape 25 compare l'accélération totale $\gamma_{total}$ vue par l'accéléromètre longitudinal, éventuellement synchronisée et filtrée, avec l'accélération longitudinale $\gamma_{longi // axe vue}$ par les capteurs de vitesse à chaque roue, pour en extraire la composante due à la pesanteur, puis l'inclinaison de la route. En sortie de l'étape 25, une information 13 relative à l'inclinaison de la route est délivrée.

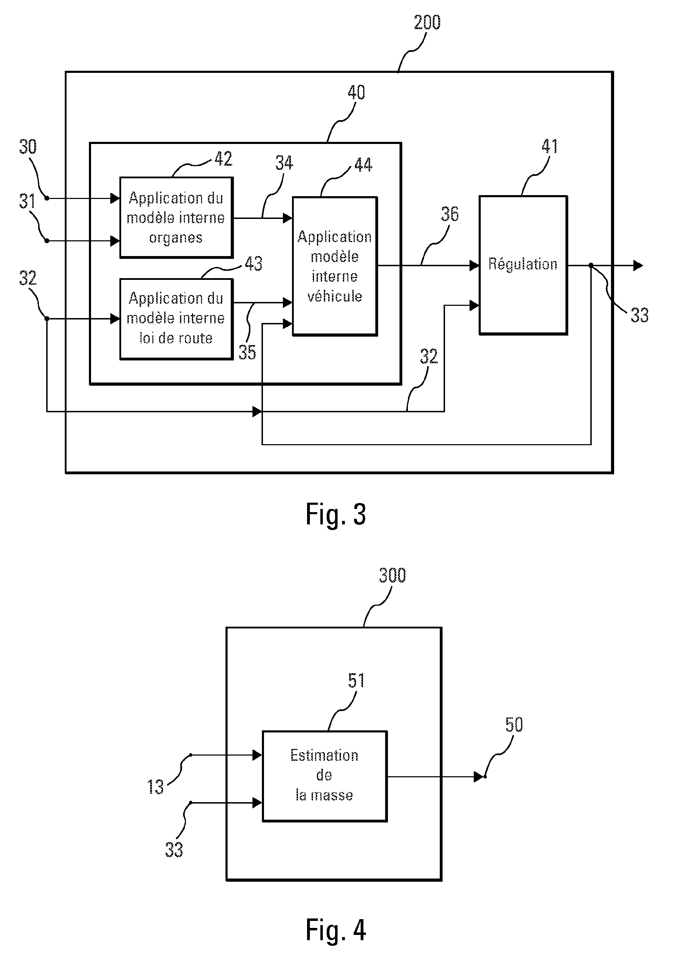

La figure 3 montre par un synoptique un mode de réalisation de l'étape d'estimation de variation d'effort résistif compris dans le procédé d'estimation de charge longitudinale selon l'invention.

L'étape d'estimation de variation d'effort résistif 300 comporte une étape d'application d'un modèle nominale 40 du véhicule 1. Le modèle nominal préétabli mis en oeuvre à l'étape 40 a pour fonction de prévoir le mouvement du véhicule 1 en fonction de commandes (couples moteur, pression de freinage, rapport de boîte...), et du mouvement actuel (déplacement, vitesse, et/ou accélération) du véhicule 1 dans les limites connues de la précision dudit modèle. Pour cela, ladite étape 40 reçoit :

- une information 30 correspondant à une consigne d'effort (ou couple) à destination du Groupe Moto Propulseur, ou bien une mesure ou estimation de l'effort (ou couple) fourni par ce système ;
- une information 31 correspondant à une consigne d'effort (ou couple) à destination du système de freinage, ou bien une mesure ou estimation de l'effort (ou couple) fourni par ce système ;
- une information 32 correspondant au mouvement observé du véhicule 1 (comprenant par exemple une information d'accélération longitudinale, une information de vitesse...).

Les informations 30 et 31 sont utilisées au sein d'une étape 42 d'application d'un premier modèle interne représentatif du comportement dynamique des organes du véhicule 1. L'information 32 est utilisée au sein d'une étape 43 d'application d'un deuxième modèle interne représentatif de la loi de route du véhicule, c'est-à-dire un modèle représentant de façon empirique et nominale l'ensemble des efforts résistants (frottements, aérodynamique,...) auquel est soumis le véhicule. Ces deux modèles délivrent des informations alimentant une étape 44 d'application d'un troisième modèle interne réprésentatif du comportement dynamique du véhicule 1. L'étape 40 aboutit in fine au calcul d'une information 36 représentant le mouvement modélisé du véhicule 1 à partir des informations 30, 31, 32. L'information 36 est transmise à une étape 41 de régulation au cours de laquelle l'écart entre le déplacement prévu représenté par l'information 36 et le déplacement observé représenté par l'information 32, indépendamment des causes réelles de cet écart, est déterminé. Cet écart est ainsi assimilé à une perturbation globale exprimée sous une forme homogène à une force (en Newton), appelée « variation d'effort résistif » et notée $\Delta F$. A l'issue de l'étape 41 de régulation, l'information de variation d'effort résistif $\Delta F$ est transmise sous la forme d'une information 33, cette information 33 étant notamment transmise à l'étape 44 d'application du troisième modèle interne pour réaliser une boucle d'asservissement fermée.

La figure 4 montre par un synoptique, un mode de réalisation de l'étape d'estimation de masse compris dans le procédé d'estimation de charge longitudinale selon l'invention.

L'étape 300 d'estimation de masse selon l'invention comporte une étape 51 recevant en entrée l'information 13 relative à l'inclinaison de la route et l'information 33 relative à la variation d'effort résistif $\Delta F$, ainsi que différentes informations 32 correspondant au mouvement observé du véhicule 1 (et notamment une information d'accélération longitudinale). Au cours de l'étape 51, la part de variation d'effort résistif non du à l'inclinaison de la voirie est calculée puis délivrée sous la forme d'une information 50 correspondant à la variation de masse du véhicule. L'information 50 inclue alors les incertitudes sur les modèles internes utilisées notamment pour le calcul de l'information 33 relative à la variation d'effort résistif $\Delta F$.

La figure 5 illustre, par un schéma blocs, un mode de réalisation d'un dispositif d'estimation de charge longitudinale selon l'invention. Le dispositif selon l'invention comporte notamment :

- un estimateur d'inclinaison de la route 500 adapté à la mise en oeuvre de l'étape d'estimation d'inclinaison de voirie 100 du procédé d'estimation de charge longitudinale selon l'invention ;
- un estimateur de la variation d'effort résistif 600 adapté à la mise en oeuvre de l'étape d'estimation de variation d'effort résistif 200 compris dans le procédé d'estimation de charge longitudinale selon l'invention ;
- éventuellement, un estimateur d'écart de masse 700 adapté à la mise en oeuvre de l'étape d'estimation de masse 300 compris dans le procédé d'estimation de charge longitudinale selon l'invention.

L'estimateur d'inclinaison de la route 500 reçoit notamment en entrée la mesure d'accélération longitudinale 10 et différentes informations 32 correspondant au mouvement observé du véhicule 1. L'estimateur d'inclinaison de la route 500 reçoit aussi une estimation de l'assiette du véhicule (l'angle $\alpha2$ sur la figure 1a), ladite assiette étant calculée par un dispositif estimateur d'assiette 520. L'estimateur d'inclinaison de la route 500 délivre notamment en sortie :

- l'information 13 relative à l'inclinaison de la route sur laquelle évolue le véhicule 1, exprimée par exemple en pourcentage et/ou sous forme de mesure angulaire ;

- éventuellement, une information 510 relative à l'accélération $\gamma_{pente}$ dûe à l'inclinaison de la voirie (représenté sur la figure 1 a).

L'estimateur de variation d'effort résistif 600 reçoit notamment en entrée les informations 30, 31 relatives respectivement aux efforts (ou couples) réalisés par le système « Groupe Moto Propulseur » et le système de freinage. Ces informations pouvant être des mesures ou des estimations fournies respectivement par le système « Groupe Moto Propulseur » ou par le système de freinage, ou bien les consignes à destination de ces systèmes. L'estimateur 600 reçoit aussi les informations 32 correspondant au mouvement du véhicule 1 observé. L'estimateur de variation d'effort résistif 600 délivre notamment en sortie l'information 33 relative à la variation d'effort résistif subie par le véhicule 1.

L'estimateur d'écart de masse 700 reçoit notamment en entrée différentes informations 32 correspondant au mouvement observé du véhicule 1, l'information 13 relative à l'inclinaison de la route sur laquelle évolue le véhicule 1, l'information 33 relative à la variation d'effort résistif subie par le véhicule 1. L'estimateur d'écart de masse 700 délivre notamment en sortie l'information 50 relative à la variation de masse du véhicule 1.

Le dispositif d'estimation de charge longitudinale selon l'invention peut par exemple être implémenté au sein d'un calculateur autonome ou encore dans un calculateur partagé par une ou plusieurs fonctions d'assistance au conducteur du véhicule. Le dispositif peut être programmé sur un composant électronique à logique programmable ou encore sur une carte à microprocesseur. Le dispositif peut aussi être réalisé à partir de composants électroniques.

**Revendications**

1. Procédé d'estimation de la charge longitudinale à laquelle est soumis un véhicule automobile (1), ledit véhicule (1) comprenant un ensemble de fonctions d'assistance au conducteur, **caractérisé en ce qu'**il comporte au moins :

    • une étape d'estimation d'inclinaison de voirie (100) délivrant une information (13) relative à l'inclinaison de la route sur laquelle évolue le véhicule (1) en fonction de mesures d'accélération longitudinale (10) et d'informations (32) relatives à la vitesse du véhicule (1) ;
    • une étape d'estimation de variation d'effort résistif (200) subie par le véhicule (1) délivrant une information (33) relative à la variation d'effort résistif subie par le véhicule en fonction d'une part des informations (30, 31) relatives soit à des consignes d'effort à destination du groupe moteur et du système de freinage soit à partir d'estimations ou de mesure des efforts réalisés par ces mêmes organes et d'autre part à partir d'informations (32) correspondant au mouvement du véhicule (1) observé ;

    les estimations réalisées étant adapté aux besoins propre à chacune des fonctions du véhicule (1).

2. Procédé selon la revendication 1 **caractérisé en ce qu'**il comporte une étape d'estimation de masse (300) délivrant une information (50) relative à la variation de masse du véhicule (1) en fonction de l'information (13) relative à l'inclinaison de la route, de l'information (33) relative à la variation d'effort résistif, et différentes informations (32) correspondant au mouvement observé du véhicule (1).

3. Procédé selon l'une quelconques des revendications 1 à 2 **caractérisé en ce que** l'étape d'estimation d'inclinaison de voirie (100) reçoit en entrée :

    • une mesure d'accélération longitudinale (10) ;
    • une mesure ou estimation de la vitesse longitudinale du véhicule (11) ;
    • une information (12) permettant de déterminer le sens de roulage du véhicule (1) ;

    les mesures de la vitesse du véhicule (11) et l'information (12) sur le sens du roulage étant combinées dans une étape (21) pour obtenir une vitesse signée du véhicule (1), ladite vitesse signée étant dérivée dans une étape (22), l'étape (22) aboutissant à une information (14) représentant l'accélération longitudinale ($\gamma_{longi // axe roues}$), l'information (14) représentant l'accélération longitudinale ($\gamma_{longi // axe roues}$) étant utilisée par une étape (23) d'estimation d'assiette dans le calcul de l'assiette du véhicule (15), une étape (20) synchronisant temporellement la mesure d'accélération longitudinale (10) et l'information (14) représentant l'accélération longitudinale $\gamma_{longi // axe roues}$, et délivrant une information (16) représentant l'accélération totale ($\gamma_{totale}$), une étape (25) de calcul de l'inclinaison de voirie délivrant en sortie une information (13) relative à l'inclinaison de la route par comparaison de l'accélération totale ($\gamma_{total}$) avec l'accélération longitudinale ($\gamma_{longi // axe roues}$).

4. Procédé selon l'une quelconques des revendications 1 à 3 **caractérisé en ce que** l'étape d'estimation de variation d'effort résistif (200) comporte :

• une étape d'application d'un modèle nominal (40) du véhicule (1) adapté au calcul d'une information (36) représentant le mouvement modélisé du véhicule (1) à partir d'une information (30) correspondant à une consigne ou couple à destination du Groupe Moto Propulseur, ou bien une mesure ou estimation de l'effort (ou couple) fourni par ce système, d'une information (31) correspondant à une consigne d'effort ou couple à destination du système de freinage, ou bien une mesure ou estimation de l'effort (ou couple) fourni par ce système, d'une information (32) correspondant au mouvement observé du véhicule (1);

• une étape (41) de régulation au cours de laquelle l'écart entre le déplacement prévu représenté par l'information (36) représentant le mouvement modélisé du véhicule (1) et le déplacement observé représenté par l'information (32) correspondant au mouvement observé du véhicule (1) est utilisé pour le calcul d'une information (33) représentant la variation d'effort résistif (ΔF).

**5.** Procédé selon l'une quelconques des revendications 1 à 4 **caractérisé en ce que** l'étape d'estimation de masse (300) comporte une étape (51) recevant en entrée l'information (13) relative à l'inclinaison de la route et l'information (33) relative à la variation d'effort résistif (ΔF), ainsi qu'une information (32) correspondant au mouvement observé du véhicule (1), la part de variation d'effort résistif non du à l'inclinaison de la voirie étant calculée puis délivrée sous la forme d'une information (50) correspondant à la variation de masse du véhicule.

**6.** Dispositif d'estimation de charge longitudinale **caractérisé en ce qu'**il comporte :

• un estimateur d'inclinaison de la route (500) adapté à la mise en oeuvre de l'étape d'estimation d'inclinaison de voirie (100) du procédé d'estimation de charge longitudinale selon l'une quelconques des revendications 1 à 5 ;

• un estimateur de la variation d'effort résistif (600) adapté à la mise en oeuvre de l'étape d'estimation de variation d'effort résistif (200) compris dans le procédé d'estimation de charge longitudinale selon l'une quelconques des revendications 1 à 5.

**7.** Dispositif d'estimation de charge longitudinale selon la revendication 6 **caractérisé en ce qu'**il comporte un estimateur d'écart de masse (700) adapté à la mise en oeuvre de l'étape d'estimation de masse (300) compris dans le procédé d'estimation de charge longitudinale selon l'une quelconques des revendications 1 à 5.

**8.** Dispositif d'estimation de charge longitudinale selon l'une quelconques des revendications 6 à 7 **caractérisé en ce que** l'estimateur d'inclinaison de la route (500) reçoit en entrée les mesures d'accélération longitudinale (10) et différentes informations (32) correspondant au mouvement observé du véhicule (1), une estimation de l'assiette du véhicule (1), l'estimateur d'inclinaison de la route (500) délivrant en sortie au moins l'information (13) relative à l'inclinaison de la route sur laquelle évolue le véhicule (1).

**9.** Dispositif d'estimation de charge longitudinale selon l'une quelconques des revendications 6 à 8 **caractérisé en ce que** l'estimateur de variation d'effort résistif (600) reçoit en entrée les informations (30, 31) respectivement aux efforts (ou couples) réalisés par le système « Groupe Moto Propulseur » et le système de freinage, ces informations pouvant être des mesures ou des estimations fournies respectivement par le système « Groupe Moto Propulseur » ou par le système de freinage, ou bien les consignes à destination de ces systèmes, et les informations (32) correspondant au mouvement observé du véhicule (1), l'estimateur de variation d'effort résistif (600) délivrant en sortie l'information (33) relative à la variation d'effort résistif subie par le véhicule (1).

**10.** Dispositif d'estimation de charge longitudinale selon l'une quelconques des revendications 6 à 9 **caractérisé en ce que** l'estimateur d'écart de masse (700) reçoit en entrée différentes informations (32) correspondant au mouvement observé du véhicule (1), l'information (13) relative à l'inclinaison de la route sur laquelle évolue le véhicule (1), l'information (33) relative à la variation d'effort résistif subie par le véhicule (1) et délivre en sortie l'information (50) relative à la variation de masse du véhicule (1).

Fig. 1a

Fig. 2

200

40

30

31

42

34

44

41

Application du
modèle interne
organes

36

Application
modèle
interne
véhicule

Régulation

33

43

32

Application du
modèle interne
loi de route

35

32

Fig. 3

300

51

13

Estimation
de
la masse

50

33

Fig. 4

Fig. 1b

Fig. 5

**Office européen des brevets**

**RAPPORT DE RECHERCHE EUROPEENNE**

Numéro de la demande

EP 07 30 1677

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2004 060255 A1 (CONTINENTAL TEVES AG & CO OHG [DE]) 28 juillet 2005 (2005-07-28) | 1,2,6,7 | INV. B60T8/172 B60W40/12 |
| Y | * alinéas [0046], [0047] * <br> * alinéa [0020] * <br> * revendications 1-14 * <br> ----- | 3-5,8-10 | G01G19/08 |
| Y | EP 1 298 020 A (BAYERISCHE MOTOREN WERKE AG [DE]) 2 avril 2003 (2003-04-02) * alinéa [0010] * * alinéas [0020], [0021] * * revendications 1,3,4 * <br> ----- | 3,8 | |
| Y | EP 0 932 033 A1 (DAIMLER CHRYSLER AG [DE]) 28 juillet 1999 (1999-07-28) * alinéas [0011] - [0018] * <br> ----- | 4,9 | |
| Y | DE 197 28 867 A1 (BOSCH GMBH ROBERT [DE]) 7 janvier 1999 (1999-01-07) * page 3, ligne 21 - page 4, ligne 16 * <br> ----- | 5,10 | |
| | | | **DOMAINES TECHNIQUES RECHERCHES (IPC)** |
| | | | B60T B60W G01G |

Le présent rapport a été établi pour toutes les revendications

| Lieu de la recherche | Date d'achèvement de la recherche | Examinateur |
|---|---|---|
| Munich | 27 mars 2008 | Colonna, Massimo |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1677

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2008

| Document brevet cité au rapport de recherche | | Date de publication | Membre(s) de la famille de brevet(s) | | Date de publication |
|---|---|---|---|---|---|
| DE 102004060255 | A1 | 28-07-2005 | AUCUN | | |
| EP 1298020 | A | 02-04-2003 | DE | 10148096 A1 | 17-04-2003 |
| EP 0932033 | A1 | 28-07-1999 | DE | 19802630 A1 | 16-09-1999 |
| | | | JP | 3008111 B2 | 14-02-2000 |
| | | | JP | 11316152 A | 16-11-1999 |
| | | | US | 6339749 B1 | 15-01-2002 |
| DE 19728867 | A1 | 07-01-1999 | FR | 2765682 A1 | 08-01-1999 |
| | | | JP | 11072372 A | 16-03-1999 |
| | | | US | 6314383 B1 | 06-11-2001 |

EPO FORM P0460

Pour tout renseignement concernant cette annexe : voir Journal Officiel de l'Office européen des brevets, No.12/82